# EUROPEAN PATENT SPECIFICATION

(11) **EP 2 422 665 B1**
(45) Date of publication and mention of the grant of the patent: **11.09.2013**
(21) Application number: 09843700.7
(22) Date of filing: 28.07.2009
(51) Int. Cl.: A47J 37/00

(54) **DEEP FRYER**
FRITTEUSE
FRITEUSE

(30) Priority: 21.04.2009 KR 20090034577
(43) Date of publication of application: 29.02.2012
(73) Proprietor: Seo, In-Won, Cheonan-si, Chungcheongnam-do 330-220 (KR)
(72) Inventor: KWON, Young-Joong, Seoul 110-260 (KR)
(74) Representative: Richardt Patentanwälte GbR
(86) International application number: PCT/KR2009/004203
(87) International publication number: WO 2010/123172

(56) References cited:
- EP-A1- 1 797 802
- KR-A- 19980 082 218
- KR-B1- 100 387 739
- KR-Y1- 200 196 653
- KR-Y1- 200 196 653
- US-B1- 6 363 840

## Description

### Technical Field

In the conventional art, there were problems such as carbonization occurring when flour, batter, and the like, coated on the surface, peels off from a food material such as meat such as chicken, vegetables, and the like, and contacts with a heater and the like that is provided in a lower portion of a frying pot to cause a heat, or affect against the turbidity of cooking oil, or generation of toxic substances such as trans fat and the like occurring when cooking oil is heated near to an ignition point of cooking oil in order to fry processed meat products, and the like. As an example a fryer is disclosed in EP 1 797 802 A1. The presented fryer is equipped with a device for automatically removing deep-fried batter balls and an automatic cooking oil cleaning device to keep the cooking oil clean, prevent its degradation and thereby extend its useful life.

### Background Art

To outperform the problems found in the conventional art, the present invention effectively configures a collection container that is thermally separated from a frying pot containing a direct heat source and contains water with a high specific heat and a high specific gravity compared to cooking oil, and the like, which, instead of separating residue such as batter and the like left after cooking, automatically separates the residue while cooking and circulates cooking oil containing a predetermined ratio of water in a lower portion of the frying pot through a quantitative control, thereby effectively removing residue deposited in the lower portion of the frying pot. Here, a predetermined amount of water is heated on the surface of a heater and turns into high calories of vapor and thereby is scattered over the cooking oil. Accordingly, the present invention may provide the frying pot containing the overall appropriate quantity of heat.

### Disclosure of Invention

### Technical Goals

To achieve the above objectives of the present invention, residue such as bread crumbs, flour, and the like, separated or peeled off from food materials such as vegetables or meat needs to be effectively separated. When processing water of a collection container containing the separated residue, cooking oil needs to be prevented from being mixed with waste water. The quantitative control needs to be performed so that a predetermined amount of water may be vaporized in a frying pot.

### Technical Solutions

According to an aspect of the present invention, there is provided a deep fryer, wherein a high temperature of a frying pot and a collection container containing water are separated from each other and are connected to each other using a pipe, a screw for circulating cooking oil into one direction is installed in the middle of the pipe, residue collected in circulating cooking oil accelerates a contact with water due to stirring operation by the eddy of the screw to thereby separate oil components from the collection container, and a partition wall for preventing the separated residue from flowing again into the frying pot and the like is configured in the collection container, and an electron valve for inflow and cutoff of tap water and a water level sensor for managing a water level, a sensor for measuring a temperature, a control circuit for controlling the speed of the screw, and the like, are configured to generate a predetermined amount of vapor.

### Advantageous Effect

According to the present invention, it is possible to prevent cooking oil from being discolored to be black, and to prevent carbohydrate such as flour and the like from being exposed to a high heat and thereby being transformed to toxic substances such as trans fat. A predetermined amount of vapor contains high calories and thus reduces a cooking time and prevents food materials from being excessively dehydrated. In addition, cooking is quickly performed at a relatively low temperature to thereby significantly decrease the destruction of nutrients. Accordingly, it is possible to use cooking oil for a lengthy period and to perform cooking useful for health.

### Brief Description of Drawings

FIG. 1 is a perspective view to describe the present invention;
FIG. 2 is an interior perspective view of FIG. 1;
FIG. 3 is an interior perspective view illustrating a cut right side of FIG. 1 to describe the present invention;
FIG. 4 is a view to describe the circulation of cooking oil according to the present invention;
FIG. 5 is a view to describe a structure of a nozzle duct for circulating oil inducement and vapor generation;
FIG. 6 is an interior perspective view illustrating the cut front of FIG. 1; and
FIG. 7 is a view to describe a configuration of a screw for circulation.

### ***** Explanation of reference numerals used in drawings*****

| | | | |
|---|---|---|---|
| 1: | electric heater (heat source) | 2: | frying pot |
| 3: | valve for cooking oil discharge | 4: | cutoff valve for upper/lower cooking oil |
| 5, 14: | union connectors | | |
| 6: | electron valve for water level control (supply) | | |
| 7: | water supply valve | 8: | collection container |
| 9: | electron valve for water level control (discharge) | | |
| 10: | discharging hole | | |
| 11, 15: | water level sensors | 12: | cutoff valve for circulating oil |
| 13: | circulating oil transfer pipe | 16: | air exhauster |
| 17: | water level indicator | 101: | residue filtering wall |
| 102: | screw rotation motor | 104: | circulation and stirring screw |
| 105: | nozzle duct for circulating oil inducement and vapor generation | | |
| 106: | indicator for circulating oil migration | | |
| 107, 109: | circulating oil transfer pipe | | |
| 110: | screw outer wall pipe | 120: | support for heater interval maintain |
| 121: | funnel for circulating oil inducement | | |
| 122: | circulation oil outlet for vapor generation | | |

### Best Mode for Carrying Out the Invention

Hereinafter, embodiments of the present invention will be described with reference to the accompanying drawings.

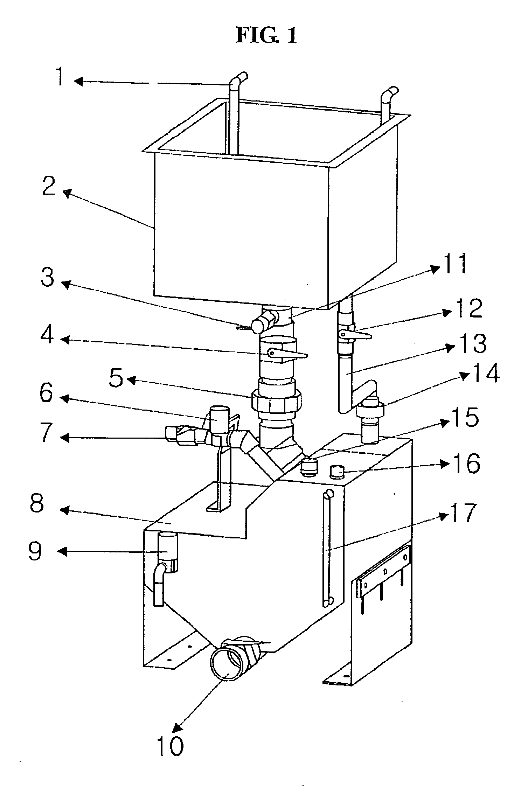

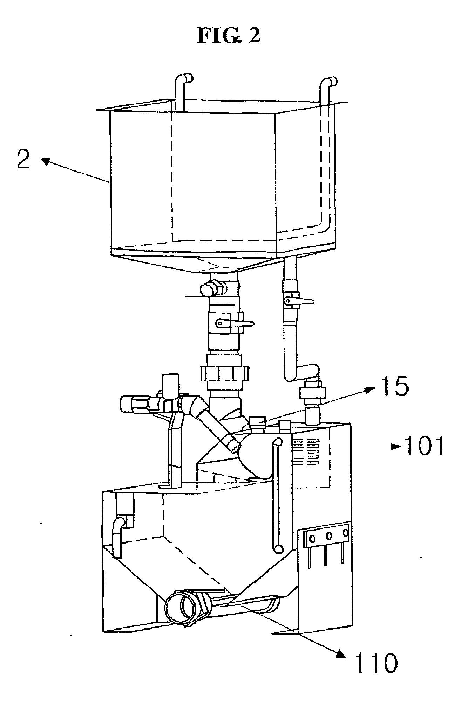

FIG. 1 is a perspective view to describe the present invention, and FIG. 2 is an interior perspective view of FIG. 1. Referring to FIG. 1 and FIG. 2, a frying pot 2 (hereinafter, referred to as a "pot") for heating cooking oil is positioned in a geographically top portion where the gravity affects. A heater 1 such as an electric heat is installed within the pot 2 at an appropriate height from a lower portion of the pot 2. Water having a relatively great specific gravity compared to cooking oil is filled in a lower portion of the heater 1. A collection container 8 for filtering and sinking residue is positioned below the pot 2 and is connected to the pot 2 using a pipe that is connected between the pot 2 and the collection container 8 using a valve 4, manually opened and closed, and a union connector 5.

In FIG. 1, reference numeral 3 indicates a valve for cooking oil discharge, reference numeral 6 indicates an electron valve for water level control (supply), reference numeral 7 indicates a water supply valve, reference numeral 9 indicates an electron valve for water level control (discharge), reference numeral 10 indicates a discharging hole, reference numerals 11 and 15 indicate water level sensors, reference numeral 13 indicates a circulating oil transfer pipe, reference numeral 14 indicates a union connector, reference numeral 16 indicates an air exhauster, and reference numeral 17 indicates a water level indicator.

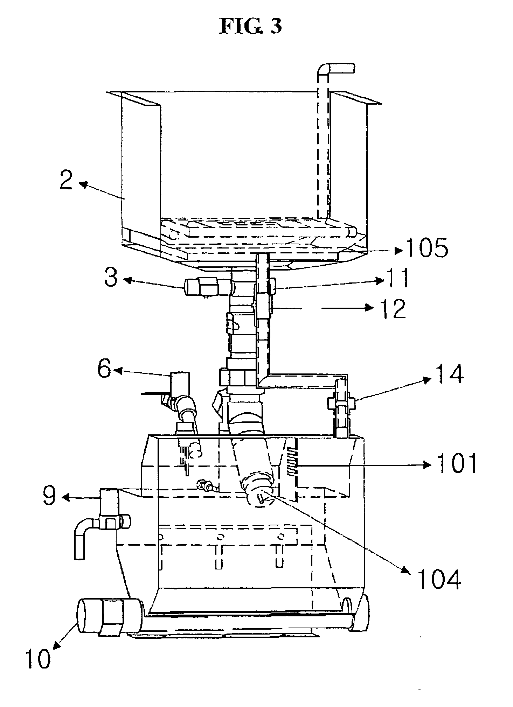

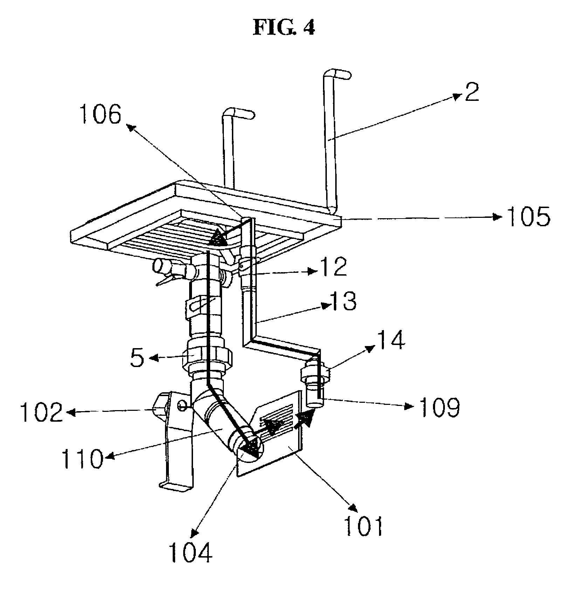

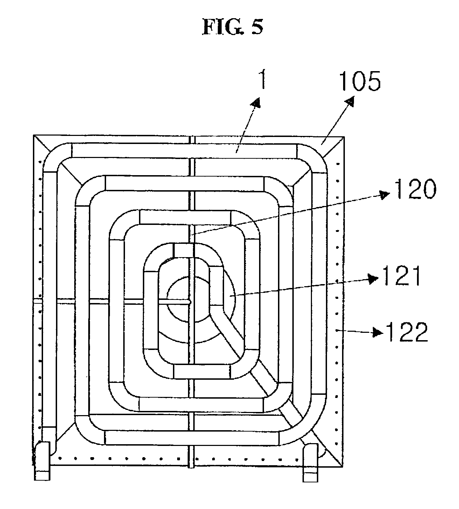

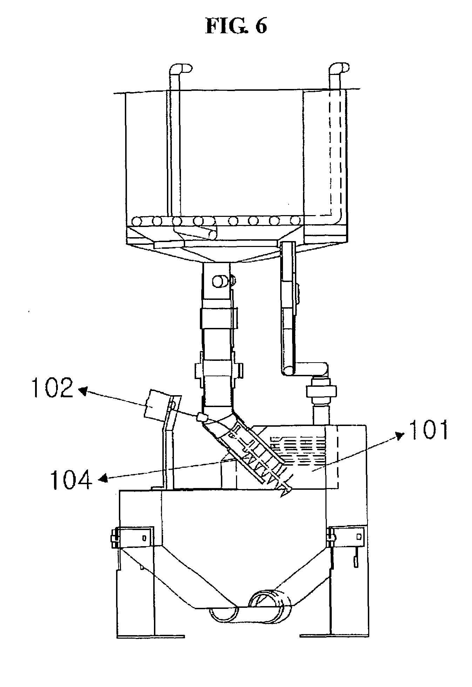

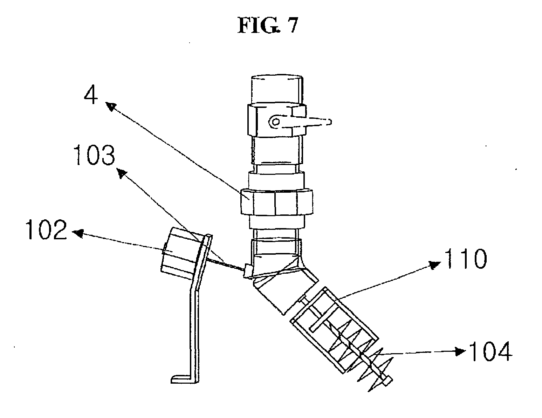

FIG. 3 is an interior perspective view illustrating a cut right side of FIG. 1 to describe the present invention. In FIG. 3, reference numeral 101 indicates a residue filtering wall, and reference numeral 104 indicates a circulation and stirring screw. FIG. 4 is also a view to describe the circulation of cooking oil according to the present invention, FIG. 5 is a view to describe a structure of a nozzle duct for circulating oil inducement and vapor generation, FIG. 6 is an interior perspective view illustrating the cut front of FIG. 1, and FIG. 7 is a view to describe a configuration of a screw for circulation. Here, reference numeral 102 indicates a screw rotation motor, reference numeral 103 indicates a rotation shaft connecting the screw rotation motor 102 and the circulation and stirring screw 104, reference numeral 105 indicates a nozzle duct for circulating oil inducement and vapor generation, reference numeral 106 indicates an indicator to describe circulation, reference numeral 110 indicates a screw outer wall pipe, reference numeral 120 indicates a support for maintaining an interval of the heater 1, reference numeral 121 indicates a funnel for circulating oil inducement, and reference numeral 122 indicates a circulation oil outlet for vapor generation

In the above-noted embodiment, in the case of an operation, the electron valve for water level control (supply) 6 connected in series to the water supply valve 7 may be opened to fill water in the collection container 8 until the water reaches a predetermined level, while monitoring the electronic type water level sensor 15 using an electronic controller (not shown). Here, when cooking oil is filled in the pot 2 positioned above the collection container 8, the cutoff valve for upper/lower cooking oil 4 and the cutoff valve for circulating oil 12 may be in a locked state through a manual manipulation. The air within the collection container 8 may be discharged through the air exhauster 16 while the water is being filled in the collection container 8.

When the water fills in the collection container 8 by a predetermined water level, the electronic controller may output a signal sound indicating that the water is filled in by the predetermined water level and may display, on a display, a message indicating opening of the cutoff valves 4 and 12. In this case, the cutoff valves 4 and 12 may be artificially opened and cooking oil filled in the pot 2 flows down into the collection container 8 along a connection pipe including the valve 4 and the union connector 5. The water and the cooking oil may contact with each other on the water level surface of the collection container 8.

On the contrary, in the case of an operation for discharging water or cooking oil, the electron valve 6 for controlling the water level may be opened by supplying tab water in a state where the cutoff valve 4 is open. When adding water, the contact surface between cooking oil and water may increases whereby the water may push up the cooking oil above the pot 2. Here, a control circuit (not shown) for monitoring the water level sensor 11 may suspend supply of tab water, and may output a sound and display a message. When artificially closing the valves 4 and 12 and discharging water within the collection container 8, the water may be discharged to the outside through the discharging hole 10.

Also, when discharging cooking oil, the cooking oil may be discharged by opening the valve for cooking oil discharge 3. To prevent cooking oil from being mixed with water when discharging the water, water may be filled in to be above the valve 4 at which a separation into an upper portion and a lower portion is enabled, using an aspect that the cooking oil has a relatively low specific gravity compared to the water. Also, the water level sensors 11 and 15 may be configured based on an aspect that general cooking oil has no conductivity and water has conductivity.

In the above-noted embodiment, an operation of performing a frying dish will be described. Cooking oil may be heated by supplying power to the heater 1 until the cooking oil reaches a temperature set in an electronic temperature controller (not shown). Here, when quickly heating cooking oil until the cooking oil reaches a predetermined appropriate temperature, the circulation and stirring screw 104 of FIG. 3 may operate to pull down the cooking oil of the upper portion to the collection container 8, and an end portion of the circulation and stirring screw 104 quickly rotating by the screw rotation motor 102 may contact with a water layer. In this instance, water and cooking oil may be stirred. The pressure within the collection container 8 may increase by an amount of cooking oil pulled down to the collection container 8 from the pot 2 of the upper part. The mixture of water and cooking oil may flow into the pot 2 through the nozzle duct 105 for circulating oil induction and vapor generation, disposed below the pot 2, along the circulating oil transfer pipes 13 and 109 via a slit groove of the residue filtering wall 101 of FIG. 4. A temperature of the mixture is lower than a temperature of cooking oil within the pot 2 and thus, the mixture may flow in the lower portion of the pot 2 without elevating due to convection dynamics and thereby discharge residue such as bread crumbs falling down and the like and may push the residue down into the collection container 8 by the suction force generated by the motion of the circulation and stirring screw 104. A portion of the mixture pushed up due to the pressure of the nozzle duct 105 for circulating oil induction and vapor generation may reach the circulation oil outlet for vapor generation 122 of FIG. 5, which is formed in an upper portion of the nozzle duct 105. Through this, vapor may be heated by the heater 1 positioned in the upper portion and thereby elevates. About 593 calories/g may be required to make water into vapor. In this instance, vapor may absorb a sufficient amount of calories with preventing a temperature of the surface of the heater 1 from excessively increasing and thereby be mixed with cooking oil and elevates. With elevating, the vapor may absorb calories of cooking oil having a high temperature and thereby turn into vapor having a high containing heat. If simply comparing, calories contained in vapor 1g may be at least 1000 folds of calories contained in 1 g of cooking oil.

Accordingly, an appropriate amount of vapor may be generated by controlling the number of rotations of the circulation and stirring screw 104 provided within the collection container 8 to thereby control the pressure within the collection container 8, and by controlling an amount of water discharged via the circulating oil outlet 122 for vapor generation based on the pressure.

Also, hot cooking oil including vapor may cause a great convection to thereby enable very fast heat exchange on the surface of food materials (not shown) to be fried. Due to a specific heat of vapor, containing energy enables the food materials to be quickly fried. Accordingly, even though data may differ based on a containing level of vapor, an amount of time, for example, about 15 minutes generally used to fry chicken at the temperature of 180 degrees may be reduced to be around ten minutes. Here, cooking may proceed at a significantly low temperature in which the temperature of cooking oil is about 150 degrees. As described above, since the temperature of cooking oil is relatively reduced, it is possible to decrease destruction of nutrients contained in food materials and to delay the acidification of cooking oil, and to less discharge unique juicy components contained in the food materials, thereby softening a dish.

In the above-noted embodiment, flour, batter, and the like, coated on food materials (not shown), may be peeled off or be separated from the food materials during cooking. Here, some peeled off bread crumbs or flour may be afloat on cooking oil while moisture components are being vaporized in the hot cooking oil. When the moisture components are completely vaporized, the bread crumbs or flour may be precipitated and thereby sink down since the bread crumbs or flour has a relatively high density and a high specific gravity compared to the cooking oil. Here, the bread crumbs or flour may be swept over and thereby be moved down to the collection container 8 by the mixture of water and cooking oil circulating in the lower portion of the pot 2. While being stirred with water by means of the circulation and stirring screw 104 that rotates by the screw rotation motor 102, the bread crumbs or flour may discharge cooking oil components contained in the precipitate, and thereby sink down in the water due to a specific gravity difference. As indicated by an arrow indicator of FIG. 4, cooking oil separated from the participate as above may elevate back into the pot 2 whereby the cooking oil may be prevented from being discharged when discharging water via the discharging hole 10 of the collection container 8. The water level may be controlled by opening the electron valve 6 for water level control (supply) to thereby supplement water when a water level is lowered due to the vaporization while continuously repeating the above process, and by opening the electron valve for water level control (discharge) 9 to thereby discharge water when the water level increases to at least a predetermined level due to a great amount of precipitate sunk down in the collection container 8. The water level sensor 15 for sensing the water level includes several steps of water levels and thereby gives hysteresis in order to prevent the above discharge and supply from frequently occurring.

Referring to FIG. 4, the residue filtering wall 101 is provided to prevent precipitated residue from being pushed up again to the circulating oil transfer pipe 109 by convection that is generated by the circulation and stirring screw 104. Only liquid components may get out via slit holes formed in the residue filtering wall 101 and residue may be filtered.

As shown in FIG. 6 and FIG. 7, the circulation and stirring screw 104 installed within the screw outer wall pipe 110 may receive rotary power from the screw rotation motor 102, installed outside the screw outer wall pipe 110, and thereby rotate. To solve a disorder or an insanitation issue occurring due to use of a pump type, the present embodiment connects a rotation shaft of the screw rotation motor 102 and a rotation shaft of the circulation and stirring screw 104 using the rotation shaft 103 such as a coil spring. Accordingly, since rotation is enabled at any angles and floating materials within the deep fryer are separated, the deep fryer may be hygienically safe.

## Claims

1. A deep fryer comprising:
a frying pot (2) being provided in an upper portion of the deep fryer, to heat cooking oil; and
a collection container (8) being provided in a lower portion of the deep fryer, wherein the collection container (8) is connected to the frying pot (2) using a pipe (110);
**characterized in that**
the deep fryer further comprises a circulation and stirring screw (104), and the collection container (8) further comprises a water level sensor (15), an electron valve for water level control (supply) (6), a water supply valve (7) and an electron valve for water level control (discharge) (9), wherein:
the electron valve for water level control (supply) (6) and the water supply valve (7) are opened to fill water into the collection container (8) while monitoring the electronic type water level sensor (15) using an electronic controller;
the electron valve for water level control (discharge) (9) is opened to discharge water from the collection container (8);
the circulation and stirring screw (104) is provided in the pipe (110) and is operating to pull down the cooking oil of the upper portion to the collection container (8);
water is caused to remain in an upper portion of cooking oil at all times due to pressure caused by water flowing in the collection container (8) from an outside; and wherein
the circulation and stirring screw (104) circulates the mixture of cooking oil and water so that residue is deposited, separated and thereby is collected in the lower portion of the collection container (8).

2. The deep fryer of claim 1, **characterized in that** in the frying pot (2), the mixture of cooking oil and water is controlled using a pressure of the circulation and stirring screw (104) at a lower surface position of a heater (1) whereby water contacting with the surface of the heater (1) is vaporized and high temperature and high calories of vapor is propagated to the cooking oil to thereby increase the overall containing heat.

3. The deep fryer of claim 1, **characterized in that** the circulation and stirring screw (104) is installed in an end of the pipe (110) that connects the frying pot(2) and the collection container (8) in order to effectively transfer the residue deposited in the lower portion of the frying pot (2), to quickly separate cooking oil from the residue containing the cooking oil, and to thereby deposit the residue into water, mixes water and cooking oil at a predetermined ratio, and controls the height of the mixture of water and the cooking oil to reach the lower portion of the frying pot (2).

4. The deep fryer of claim 1, **characterized in that** when replacing water of the collection container (8) or discharging cooking oil of the frying pot (2), a water level within the collection container (8) is increased by making tap water flow into the collection container (8), the water level is controlled using a water pressure and specific gravity difference until cooking oil components completely float on the frying pot (2) whereby cooking oil is prevented from being mixed with waste water when discharging the waste water and water is prevented from being mixed with cooking oil when discharging the cooking oil.

5. The deep fryer of claim 1, **characterized in that** when a temperature of water in the collection container (8) significantly increases, cold water is supplied from an outside and an amount of water corresponding to an amount of the supplied cold water is discharged by operating a discharge electron valve through a monitor of the water level sensor (15) whereby a water level is maintained at a predetermined level and the temperature within the frying pot (2) is maintained.

6. The deep fryer of claim 1, **characterized in that** a cooking time is reduced at a relatively low temperature by heating vapor together with cooking oil, and by increasing containing calories within the frying pot, and nutrients are prevented from being destroyed by delaying acidification of cooking oil.

## Patentansprüche

1. Fritteuse, aufweisend:
einen Frittierbehälter (2), der in einem oberen Abschnitt der Fritteuse vorgesehen ist, um Speiseöl zu erhitzen; und
einen Sammelbehälter (8), der in einem unteren Abschnitt der Fritteuse vorgesehen ist, wobei der Sammelbehälter (8) mittels eines Rohres (110) mit dem Frittierbehälter (2) verbunden ist;
**dadurch gekennzeichnet, dass**
die Fritteuse ferner eine Umwälz- und Aufrührschnecke (104) aufweist und der Sammelbehälter (8) ferner einen Wasserfüllstandssensor (15), ein elektronisches (Einlass-) Ventil (6) zum Steuern des Wasserfüllstands, ein Wasserzufuhrventil (7) und ein elektronisches (Auslass-) Ventil (9) zum Steuern des Wasserfüllstands aufweist, wobei:
das elektronische (Einlass-) Ventil (6) zum Steuern des Wasserfüllstands und das Wasserzufuhrventil (7) geöffnet werden, um Wasser in den Sammelbehälter (8) zu füllen, während der Elektro-Wasserfüllstandssensor (15) mittels eines elektronischen Controllers überwacht wird;
das elektronische (Auslass-) Ventil (9) zum Steuern des Wasserfüllstands geöffnet wird, um Wasser aus dem Sammelbehälter (8) abzugeben;
die Umwälz- und Aufrührschnecke (104) im Rohr (110) vorgesehen ist und betätigt wird, um das Speiseöl im oberen Abschnitt nach unten in den Sammelbehälter (8) zu ziehen;
aufgrund von Druck, der von Wasser erzeugt wird, das von außen in den Sammelbehälter (8) fließt, bewirkt wird, dass zu jeder Zeit Wasser in einem oberen Abschnitt des Speiseöls verbleibt; und wobei
die Umwälz- und Aufrührschnecke (104) die Mischung aus Speiseöl und Wasser so zirkulieren lässt, dass Rückstände abgesetzt, abgetrennt und dadurch im unteren Abschnitt des Sammelbehälters (8) gesammelt werden.

2. Fritteuse nach Anspruch 1, **dadurch gekennzeichnet, dass** im Frittierbehälter (2) die Mischung aus Speiseöl und Wasser anhand eines Drucks der Umwälz- und Aufrührschnecke (104) auf eine Unterseiten-Oberflächenposition eines Erhitzers (1) gesteuert wird, wodurch Wasser, das mit der Oberfläche des Erhitzers (1) in Kontakt kommt, verdampft wird und starke Hitze und hohe Wärmeenergie von Dampf an das Speiseöl abgegeben werden, um dadurch die insgesamt eingeschlossene Wärme zu vergrößern.

3. Fritteuse nach Anspruch 1, **dadurch gekennzeichnet, dass** die Umwälz- und Aufrührschnecke (104) in einem Ende des Rohres (110) installiert ist, welches den Frittierbehälter (2) und den Sammelbehälter (8) miteinander verbindet, um die Rückstände, die sich im unteren Abschnitt des Frittierbehälters (2) abgesetzt haben, effizient zu befördern, um Speiseöl schnell von den Rückständen zu trennen, die mit Speiseöl gemischt sind, und um dadurch die Rückstände in Wasser einzubringen, Wasser und Speiseöl in einem vorgegebenen Verhältnis mischt und die Höhe der Mischung aus Wasser und Speiseöl so steuert, dass sie den unteren Abschnitt des Frittierbehälters (2) erreicht.

4. Fritteuse nach Anspruch 1, **dadurch gekennzeichnet, dass** dann, wenn Wasser im Sammelbehälter (8) ersetzt wird oder Speiseöl aus dem Frittierbehälter (2) abgegeben wird, ein Wasserfüllstand im Sammelbehälter (8) dadurch erhöht wird, dass man Leitungswasser in den Sammelbehälter (8) fließen lässt, der Wasserfüllstand anhand eines Wasserdrucks und einer Differenz des spezifischen Gewichts gesteuert wird, bis alle Speiseölbestandteile im Frittierbehälter (2) aufschwimmen, wodurch verhindert wird, dass sich Speiseöl mit verbrauchtem Wasser mischt, wenn das verbrauchte Wasser abgegeben wird, und verhindert wird, dass Wasser sich mit Speiseöl mischt, wenn das Speiseöl abgegeben wird.

5. Fritteuse nach Anspruch 1, **dadurch gekennzeichnet, dass** dann, wenn eine Temperatur des Wassers im Sammelbehälter (8) erheblich ansteigt, kaltes Wasser von außen zugeführt wird, und eine Wassermenge, die einer Menge des zugeführten kalten Wassers entspricht, durch Betätigen eines elektronischen Ablassventils durch einen Monitor des Wasserfüllstandssensors (15) abgegeben wird, wodurch ein Wasserfüllstand auf einer vorgegebenen Höhe gehalten wird und die Temperatur im Frittierbehälter (2) beibehalten wird.

6. Fritteuse nach Anspruch 1, **dadurch gekennzeichnet, dass** eine Garzeit bei einer relativ niedrigen Temperatur durch Erhitzen von Wasserdampf zusammen mit dem Speiseöl und durch Erhöhen der eingeschlossenen Wärmeenergie im Frittierbehälter verkürzt wird, und durch eine Verzögerung der Säurebildung im Speiseöl verhindert wird, dass Nährstoffe zerstört werden.

## Revendications

1. Friteuse comprenant :
- un récipient à frire (2) prévu dans une partie supérieure de la friteuse, pour chauffer de l'huile de friture ; et
- un conteneur de collecte (8) prévu dans une partie inférieure de la friteuse, dans laquelle
- le conteneur de collecte (8) est relié au récipient à frire (2) à l'aide d'un tuyau (110) ;
**caractérisée en ce que**
- la friteuse comprend en outre une vis de circulation et d'agitation (104), et le conteneur de collecte (8) comprend en outre un capteur de niveau d'eau (15), une soupape électronique (6) pour le contrôle (alimentation) du niveau d'eau, un robinet d'alimentation en eau (7) et une soupape électronique (9) pour le contrôle (évacuation) du niveau d'eau, dans laquelle :
- la soupape électronique (6) pour le contrôle (alimentation) du niveau d'eau et le robinet d'alimentation en eau (7) sont ouverts pour remplir le conteneur de collecte (8) d'eau, tout en surveillance le capteur de niveau d'eau (15) du type électronique à l'aide d'un contrôleur électronique :
- la soupape électronique (9) pour le contrôle (évacuation) du niveau d'eau est ouverte pour évacuer l'eau du conteneur de collecte (8) ;
- la vis de circulation et d'agitation (104) est prévue dans le tuyau (110) et fonctionne pour faire descendre l'huile de friture de la partie supérieure vers le conteneur de collecte (8)
- l'eau reste toujours dans une partie supérieure de l'huile de friture, en raison de la pression produite par l'eau s'écoulant dans le conteneur de collecte (8) depuis l'extérieur ; et dans laquelle
- la vis de circulation et d'agitation (104) fait circuler le mélange d'huile de friture et d'eau, de manière à déposer les résidus, à les séparer et à les collecter ainsi dans la partie inférieure du conteneur de collecte (8).

2. Friteuse selon la revendication 1, **caractérisée en ce que** dans le récipient à frire (2), le mélange d'huile de friture et d'eau est contrôlé à l'aide d'une pression de la vis de circulation et d'agitation (104) au niveau d'une surface inférieure d'un dispositif de chauffe (1), où l'eau entrant en contact avec la surface du dispositif de chauffe (1) est vaporisée, et une vapeur à haute température et riche en calories est diffusée dans l'huile de friture pour ainsi augmenter la chaleur total contenue.

3. Friteuse selon la revendication 1, **caractérisée en ce que** la vis de circulation et d'agitation (104) est installée dans une extrémité du tuyau (110) reliant le récipient à frire (2) et le conteneur de collecte (8), afin de transférer efficacement les résidus déposés dans la partie inférieure du récipient à frire (2), de séparer rapidement l'huile de friture d'avec les résidus contenant l'huile de friture, et de déposer ainsi les résidus dans l'eau, mélange l'eau et l'huile de friture selon un rapport prédéterminé, et contrôle la hauteur du mélange d'huile de friture et d'eau pour attendre la partie inférieure du récipient à frire (2).

4. Friteuse selon la revendication 1, **caractérisée en ce que** lors du remplacement de l'eau dans le conteneur de collecte (8) ou de l'évacuation de l'huile de friture hors du récipient à frire (2), un niveau d'eau à l'intérieur du conteneur de collecte (8) est augmenté en laissant couler de l'eau du robinet dans le conteneur de collecte (8), le niveau d'eau est contrôlé à l'aide d'une pression d'eau et d'une différence de gravité spécifique, jusqu'à ce que les composants de l'huile de friture flottent totalement sur le récipient à frire (2), cela permet ainsi d'empêcher l'huile de friture de se mélanger à l'eau usée lors de l'évacuation de l'eau usée, et d'empêcher l'eau de se mélanger à l'huile de friture lors de l'évacuation de l'huile de friture.

5. Friteuse selon la revendication 1, **caractérisée en ce que** lorsqu'une température de l'eau dans le conteneur de collecte (8) augmente de façon significative, de l'eau froide est alimentée depuis l'extérieur et une quantité d'eau correspondant à une quantité d'eau froide alimentée est évacuée en activant une soupape électronique d'évacuation par le biais d'un moniteur du capteur de niveau d'eau (15), permettant ainsi de maintenir le niveau d'eau à un niveau prédéterminé et de maintenir la température dans le récipient à frire (2).

6. Friteuse selon la revendication 1, **caractérisée en ce que** le temps de cuisson est réduit à une température relativement basse, en chauffant la vapeur ensemble avec l'huile de friture, et en augmentant les calories contenues à l'intérieur du récipient à frire, empêchant ainsi de détruire les nutriments en retardant l'acidification de l'huile de friture.
